# DEMANDE DE BREVET EUROPEEN

(11) **EP 0 006 057 A1**
(43) Date de publication de la demande: **12.12.1979**
(21) Numéro de dépôt: 79400335.0
(22) Date de dépôt: 29.05.1979
(51) Int. Cl.: B29D 31/00

(54) **Procédé et dispositif pour réaliser, par refoulage de matière thermoplastique, de nouvelles structures intégrales inter-réticulaires de forme tubulaire ou en bandes ou feuilles continues**

(30) Priorité: 31.05.1978 ES 470693
(71) Demandeur: Geraud, De La Maza Bengoa, Elisa, Saint Paul De Jarrat 09. Ariège (FR)
(72) Inventeur: Geraud, De La Maza Bengoa, Elisa, Saint Paul De Jarrat 09. Ariège (FR)

(57) **Abrégé**

Procédé et dispositif pour réaliser, par refoulage d'une matière thermoplastique, une nouvelle structure intégrale inter-réticulaire de forme tubulaire ou en bandes ou feuilles continues.

Il superpose et refond en une nouvelle structure intégrale inter-réticulaire au moins deux produits réticulés primaires formés par 2 x 2 faisceaux de brins.

Le refoulage se fait respectivement pour chaque groupe par les cols d'union, les conduits, les chambres de distribution et filières (2.5.6.8), et (9) formant les faisceaux ("e") et ("f") et; par (19, 5', 20, 22, 23) et (24) les faisceaux ("c") et ("d").

Suivant l'inclinaison des rainures (e/f) rencontre (d/c) sur la ligne (1) où ils se refondent en une nouvelle structure. On transmet le mouvement d'entrecroisement par les couronnes dentées (18, 17, 35) et 130); le réglage se faitavec les écrous (14. 31) et (28).

L'invention, à multiples usages, permet d'obtenir à partir de nouvelles structures, des interchangeurs de chaleur, radiateurs, emballages, filtres, grillages, etc.

## Description

Actuellement, sur le marché, on trouve un produit, filet ou maille extrudé, formé par l'entrecroisement de deux faisceaux de brins. Ce filet se produit avec un appareil comme celui décrit dans le brevet anglais n² 836.555. ( qui correspond à celui obtenu par la suite en France sous le n² 1.189.863). Il se rapporte à la seule fabrication de tissus obtenus par refoulage continu d'une matière thermoplastique. Ce brevet, échu, est de domaine public.

Le principe est connu, fondamentalement et pour memoire, il s'agit d'appareils qui utilisent un jeu coaxial de filières de refoulement entre lesquelles un déplacement continu rotatoire ou oscillatoire se produit, transversalement par rapport au sens de refoulage. Les deux faisceaux de fils, dans ces conditions, s'entrecroisent et forment une maille tubulaire ou plane.

Posterieurement, (brevet n² 1.306.454) on a ajouté une couche ou nouveau faisceau de brins supplementaire; ces brins s'étallent longitudinalement et parallele - ment à l'are du tube formé. Ce brevet concerne, specifiquement, la fabrication de tissus destinés a confectionner par la suite des eacs et a pour but de communiquer au filet ou maille de base une meilleure stabilité du point de vue dimentionnel et de renforcer le filet ou tube de maille,ainsi obtenu, dans le sens longitudinal.

La presente invention a pour but (par le simple fait d'ajouter encore - mais de façon particulière,- au moins une couche de faisceaux de brins) d'obtenir une structure nouvelle obtenue par la superposition de, au moins, deux groupes de deux faisceaux de brins chaqu'un, convenablement traités.

Par le fait de couvrir, au moins, cette étape minimale - passer de 3 couches a 4 faisceaux de brins - on ouvre au produit obtenu de nouveaux et larges domaines d'application tout à fait impensables avec la disposition et conception precedente.

Ainsi, dans le même champ des tissus, on peut concevoir, maintenant, des complexes plus technifiée, par exemple, dans la fabrication d'élements filtrants, on peut envisager la fabrication d'une superposition, presque aussi compliquée que l'on veuille, de quelques 16 couches de faisceaux de brins coalignés, superposés, entrecroises, etc. comme un seul tout et pouvant se reproduire avec fidelité, donc offrant des solutions non connues, nouvelles.

Ainsi, dans le domaine de la fabrication des grillages, on peut envisager la fabrication de grillages comportant des elements de transmission de signaux électriques éléments isolée et integrés au fur et à mesure de la production dans la même opera- tion de refoulage...

Ainsi, dans le domaine de l'emballage des fruits et légumes, on apporte, enfin , une solution réélle au problème du "marquage" des fruits délicats... on peut envisager, en effet, la fabrication de structures légères, comme pour des filets, dont le groupe interieur serait constitué à partir du refouage d'una matière thermoplastiqu suffisamment "molle", tandis que le groupe extérieur pourrait se produire avec un composant aussi rigide, stable, etc. que l'on veuille, puisqu'il n'entrera pas en contact avec le fruit...

Ainsi, en rentrant dans le véritable nouveau domaine des STRUCTURES INTEGHALES INTER-RETICULAIRES, l'invention permet de produire, par simple refoulage continu de matières thermoplastiques, des complexes tels que, par exemple, des éléments pour ir terchangeurs de chaleurs, capteurs de chaleur solaire, radiateurs pour automobiles.

Ainsi, dans le domaine de l'agriculture, la nouvelle structure integrale inter réticulaire peut s'employer en combinant les fonctions suivantes:
- a. Un appui pour les plantes;
- b. Une conduction d'eau, pour l'arrosage, aspersion, etc.
- c. Un possible relevé automatique de la température... et par dérivation, une possible et réélle lutte automatique contre le gel, la grêle, etc.

La présente invention fait donc référence à un procédé pour produire, par refoulage continu de matières thermoplastique, simultanément, avec un seul dispositif de refoulage, soit plusieurs faisceaux (au moins quatre, ou plus,) de brins,entrecroisés ou non, formant des tubes reticulés concentriques superposés les uns sur ou dans les autres; soit plusieurs faisceaux de brins, ( au moins quatre, ou plus,) entrecroisés ou non, en couches superposées planes ou courbes; de telle sorte que tous les faisceaux contraints à s'entre-trouver, en continu, dés la sortie des filières, se refondent entre-eux, aux points de contact, constituant ainsi la nouvelle structure intégrale inter-réticulaire sous forme de tubes ou en bandes ou feuilles continus.

D'aprés l'invention, le procédé se caractérise par le fait que le nombre de fai ceaux de brins composants (4 ou plus) se traite en groupes et que chaqu'un de ces groupes se forme à partir du refoulage à pression d'une matière thermoplastique et une couleur définis, simultanément et indépendament des autres groupes de faisceaux. Chaque groupe, ainsi, posséde ses propres caractéristiques bien définies.

Le procédé est également caractérisé par le fait que tous les faisceaux de brin composants sont ensuite refondus, les uns dans les autres, grâce à la disposition convergeante ou divergeante des groupes de filières génératrices. Ces faisceaux, con traints à s'entre-trouver se fusionent pour former la nouvelle structure intégrale inter-réticulaire.

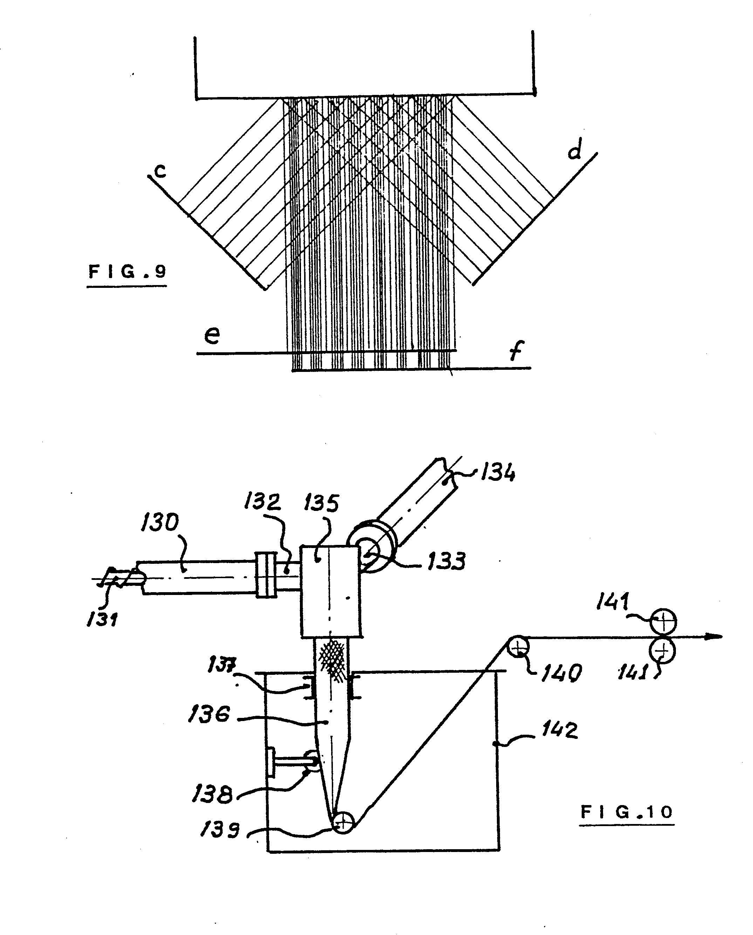

Le procédé est également caractérisé par le fait que, simultanément, il peut combiner séparément, conjointement ou en toutes combinaisons:
- a. Jusqu'à un nombre important de faisceaux de brins ( la limite pratique se situe à 16 superpositions de faisceaux, pour ne pas aboutir à une réalisation trop ccm- plexe mécaniquement parlant ).
- b. Tant de produits réticulaires primaires comme groupes de faisceaux de brins.
- c. Le refoulage, par groupes, d'une matière thermoplastique et/ou une couleur déterminées ( qui peuvent être communes, ou non, aux autres groupes ) au travers de conduits qui débouchent dans une chambre de distribution, conduits et chambre propres à chaque groupe.
- d. Des faisceaux de brins formant des couches réticulaires ou non, superposées ou coalignées concentriquement avec les autres.
- e, Des faisceaux de brins formant des couches réticulaires ou non, superposées ou coalignées linéairement à plat avec les autres.
- f. L'entrecroisement de deux faisceaux, ( voisins inmédiats ou au travers d'autres faisceaux coalignés avec l'un d'entr'eux quoique superposée dans le dispositif de refoulage ) pour se superposer en couches successives.
- g. Le coalignement de plusieurs faisceaux de brins juxtaposés sur une même couche, (fig. 10).
- h. La refonte par les points de contacts entre tous les faisceaux superposés et/ou coalignés formant ainsi la nouvelle structure.
- i. La fixation ou stabilisation du nouveau complexe.

Pour memoire, nous rappelons que par le terme "matière thermoplastique" utilisé dans les presentes et dans les revendications on entend, (à titre indicatif mais non limitatif) un matériel thermoplastique ayant une fluidité suffisante à froid ou à chaud pour pouvoir être refoulée et affermissable par la suite soit par action de coagulants ou, plus simplement, par refroidissement; plus couramment on peut employer:
- des résines synthétiques, polyéthilènes, poliamides,...
- des résines thermodurcissables, leur mélange....
- des caoutchoucs, naturels ou synthétiques, ...
- des viscoses,...
- des matières qui puissent se refouler, comme les métaux légers, verres,... Pour fermer ce préambule, nous définissons, ci-aprés, l'acception que nous donnons aux ternes suivants:

BRIN: Nous désignons par "brin" tout monofilament, lamelle, bande, feuille, tube, baguette, etc. qui puisse passer ou se former par et au travers d'une "rainure". COUCHE: Nous désignons par "couche" la lame ou lit de brins se trouvant occuper une même épaisseur dans la structure. Ainsi une couche intermédiaire se trouve placée entre d'autres couches, une couche intérieure ou extérieure limite ou forme la bordure d'un complexe.

FACE: nous désignons par "face" la côté ou paroi d'une filière qui est en contact avec la face d'une autre fillière et dont la fonction principale ect la fermeture das chambres de distribution; de cette façon on contraint la matière thermoplastique refoulée à sortir au travers des rainures pratiquées sur elles-même.

FAISCEAUX: nous désignons par "faisceau" l'ensemble des brins formés à partir des rainures façonnées sur une même face de fieliére.

FILIERE: nous désignons par "filière" la pièce mécanique, circulaire, concentrique, excentrique, plane linéaire ou courbée, sur les faces desquelles on façonne les rainures. Une filière peut presenter plusieurs faces.

PRODUIT RETICULAIRE PRIMAIRE: nous désignons par "produit réticulaire primaire" la phase de second ordre dans ce procédé de fabrication (la phase première est la formation des brins), obtenue par groupement de faisceaux de brins.

RAINURE: nous désignons par "rainure" tout orifice ou passage qui laisse passer la matière thermoplastique de la chambre de distribution à l'extérieur formant ainsi le "brin". Toute rainure peut être ouverte, comme une entaillure sur la face d'une filiè re, ou fermée, comme un perçage à travers la masse de la filière.La geometrie de la section d'une rainure, ouverte ou fermée est infiniement variable suivant sa fonction. STRUCTURE INTEGRALE INTER-RETICULAIRE: nous désignons par "structure intégrale inter- réticulaire" tout résultat de superposer les uns dans ou sur les autres, au moins 4 faisceaux de brins ou, au moins 2 produits réticulés primaires, (c'est la troisième phase du procedé), de façon à rester refondu en un tout nouveau.

Les caractéristiques de l'invention apparaîtrons ci-aprés:

Dans les dessins ci-joints, donnés à titre d'exemple illustratif mais non limitatif:
La fig. 1. représente une coupe schématique d'un dispositif de refoulage simplifié, pouvant inter-reticuler et refondre en un tout 4 faisceaux de brins formant avec eux une structure intégrale inter-réticulaire composée de deux produits réticulés primaires.
La fig. 2.-1. représente une possible disposition ou distribution des rainures sur les filières du dispositif de refoulage de la fig. 1, celles-ci sont vues de dessous. La fig. 2.-2. représente un dévellopé tangentiel des lignes d'union entre les filières avec l'emplacement des rainures sur les faces.
La fig. 3.-l. représente une structure integrale inter-réticulaire où chaque faisceau de brins occupe une couche successive au dessus des autres. On a obtenu ainsi 4 couches; elle peut être produite par le dispositif de la fig. 1.

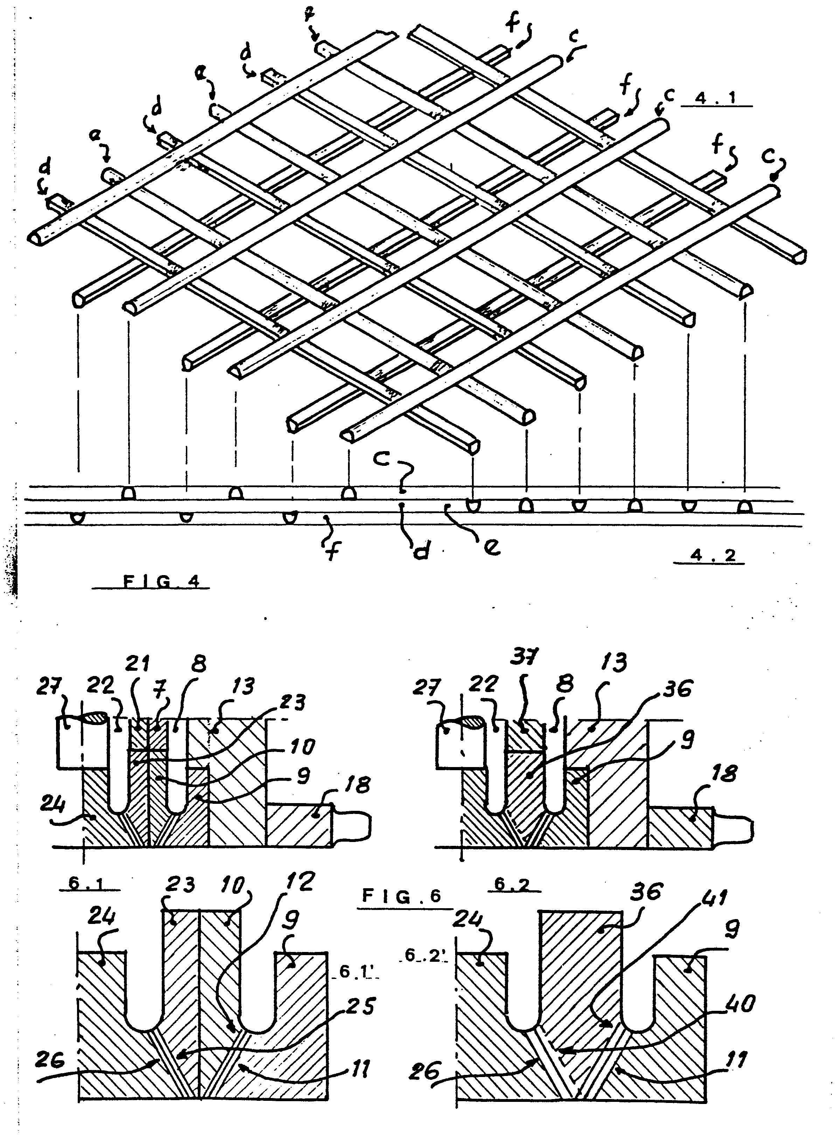

La fig. 3.-2. représente une vue laterale de la structure de la fig. 3.-1.

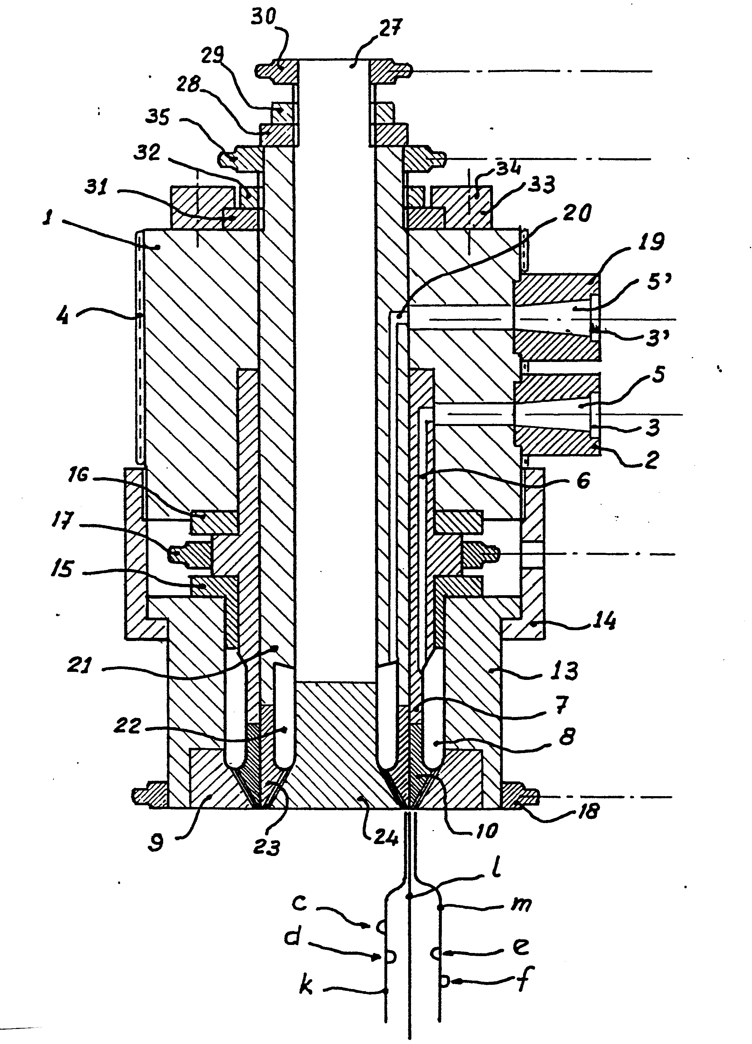

La fig. 4.-1. représente les mêmes faisceaux de brins que ceux de la fig. 3.-1. et 3.-2., mais, grâce aux possibilités du dispositif de refoulage de la fig. 1. on a coalignés sur une même couche les faisceaux de brins "d" et "e" entre les couches "c" et *f".
La fig. 4.-2. représente une vue latérale de la structure de la fig. 4.-1.
La fig. 5. représente une possible simplification du dispositif de refoulage dela fig. 1. où à la place des filières et porte filières 10,23, 7, et 21, on a placé une filière double 36 et son porte filière 37.
Les fig. 6.-1, et 6.-2, representen, sur échelle agrandie, les détails de substitution des filières simples 10 et 23 par la filière double, en " V " 36.

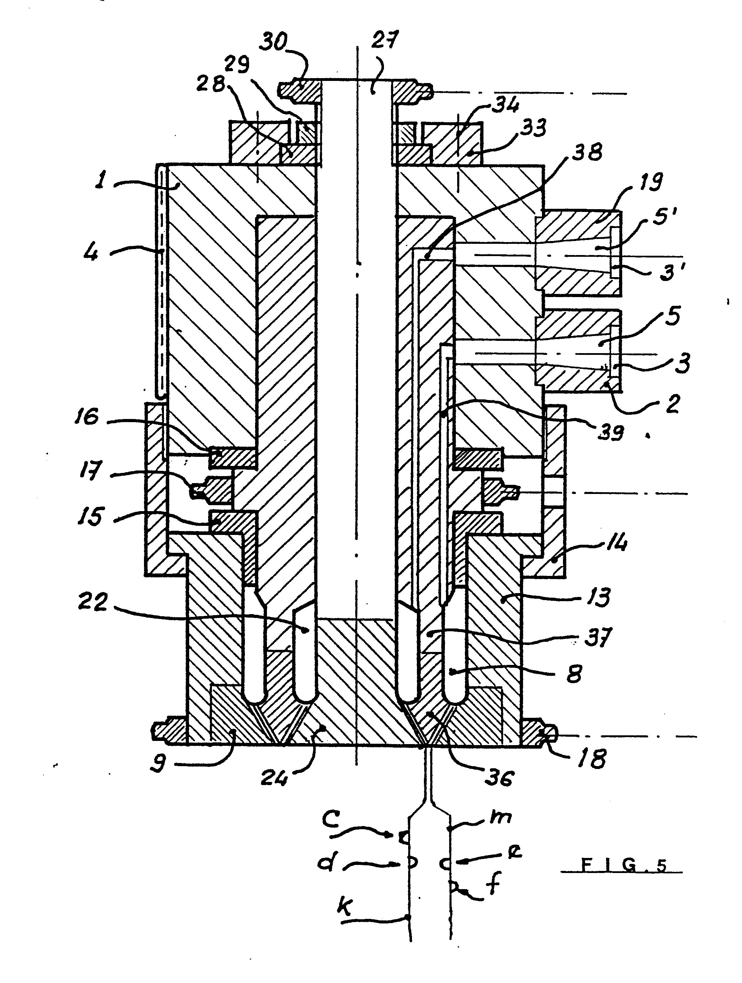

La fig. 7.-1, représente les mêmes faisceaux de brins de la fig. 3 et 4 mais où on a coalignés sur une même couche les faisceaux de brins "c", "d" et "e" sur le faisceau de brins "f" qui leur sert de support et d'union.
La fig. 7.-2. représente une vue latérale de cette structure.

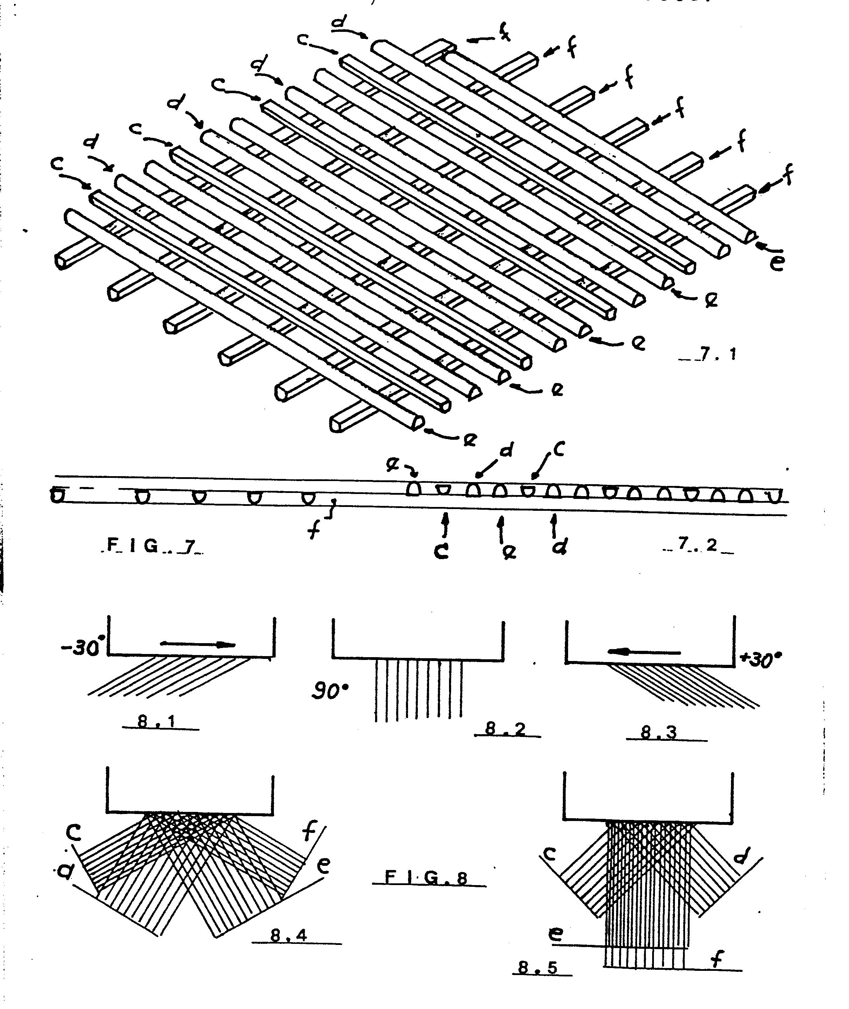

La fig. 8. représente les limites pratiques d'inclinaisons que l'on peut imposer,indépendament à chaque faisceau de brins. On peut, sans paliers, passer depuis - 30^{Q}, par la verticale, 902, jusqu'à + 30^{Q}. En 8.-4. et 8.-5. on montre, à titre orientatif des effets de croisement et coalignement de faisceaux de brins superposés et/ou coalignés.
La fig. 9. represente une formule différente de supperposition et coalignement des faisceaux de brins. On prétend montrer, avec les brins "f", la disposition pour former une bande, soit à partir de diverses rainures juxtaposées c8te à côte ou, version plue difficile à expliciter sur ces simples dessins, soit avec une rainure unique plus large que les autres.
La fig. 10. représente schématiquement une possible disposition où un dispositif de refoulage est alimenté par deux extrudeuses séparées. Dans ce cas on pourra, soit employer deux matières thermoplastiques et/ou deux couleurs differentes, une pour chaque groupe de faisceaux de brins.

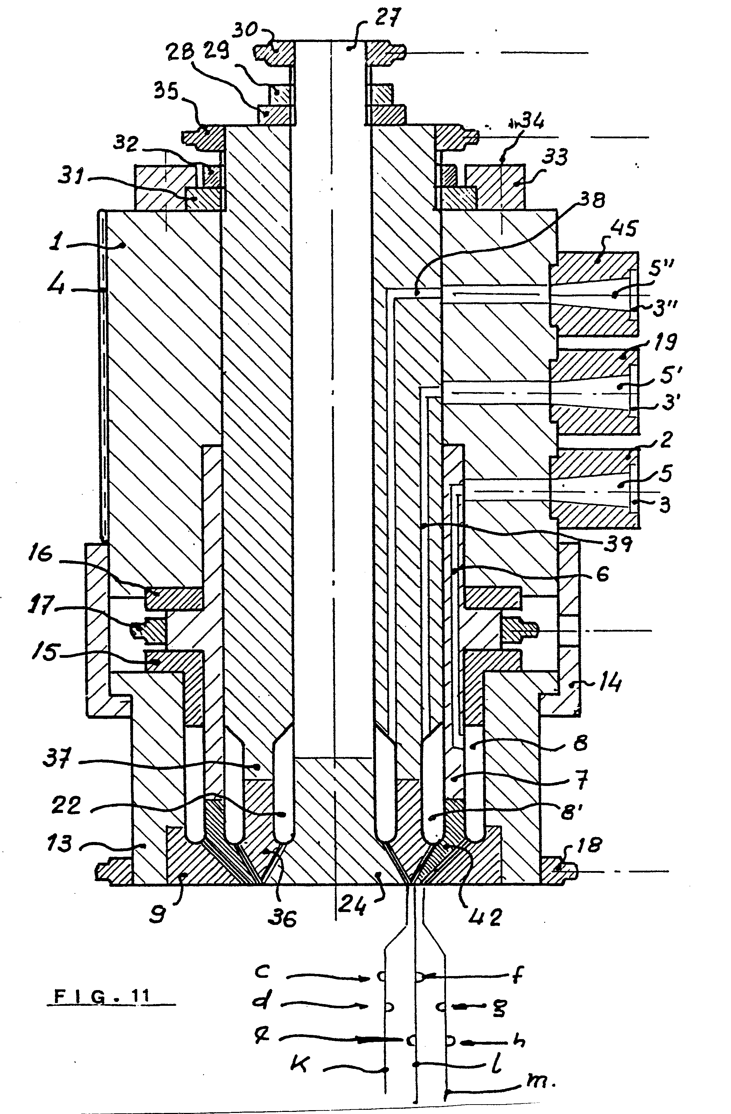

La fig. 11. représente schématiquement la coupe d'un dispositif de refoulage capable de produire une structure integrale interréticulaire à partir de trois groupes ou 6 faisceaux de brins.

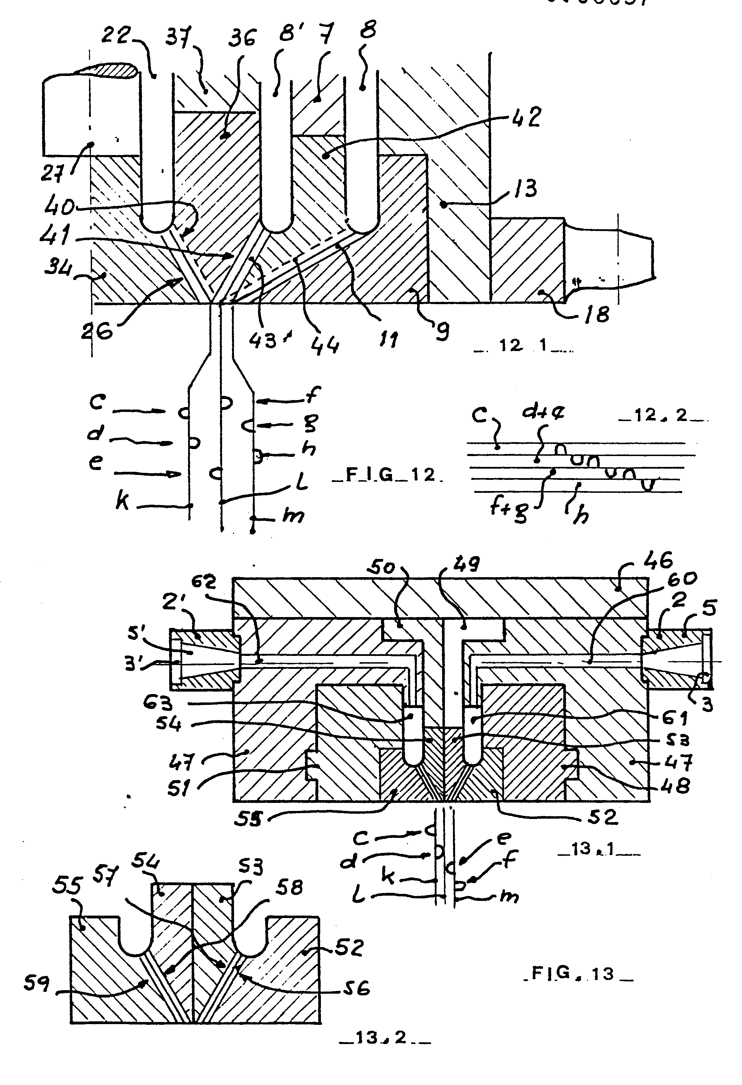

La fig. 12. représente à plus grande échelle, un détail de la disposition choisie, à titre d'exemple, pour les 4 filières ciculaires dont deux sont simples et les deux autres en " V ", doubles. En 12.-2. on représente comment se coalignent et superposent les 6 faisceaux de brins de ce dispositif de refoulage, sur 4 couches.
La fig. 13. représente schématiquement la coupe d'un dispositif de refoulage "à plat" simplifié, pouvant produire une structure integrale inter-réticulaire avec deux groupes ou 4 faisceaux de brins. En 13.-2, un détail à plus grande échelle des filières.

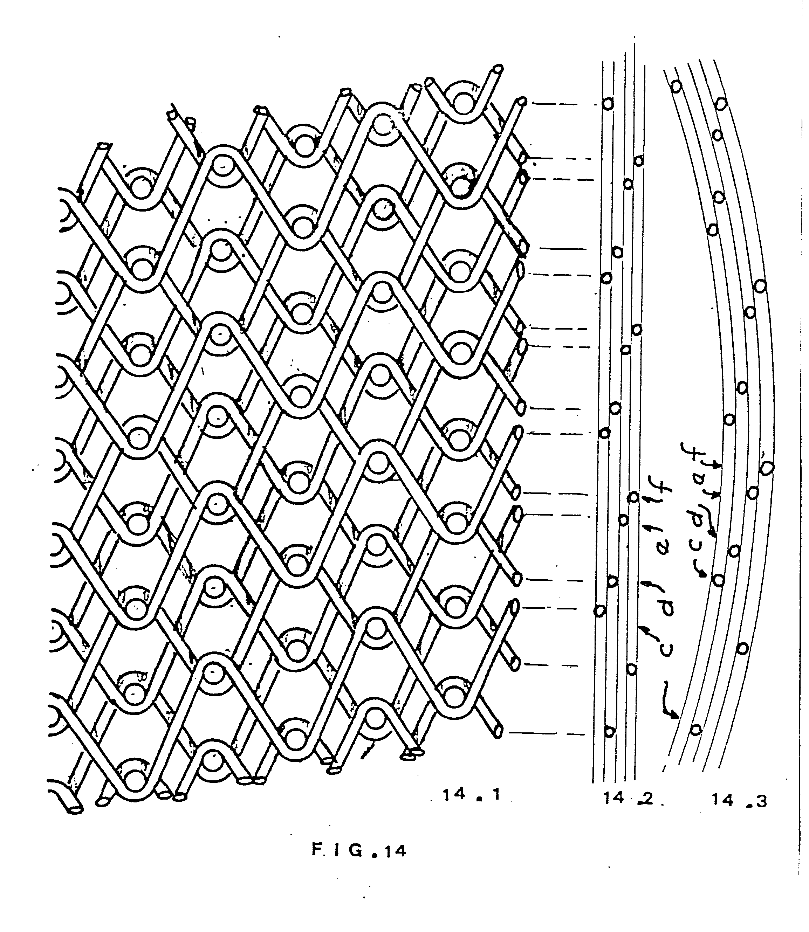

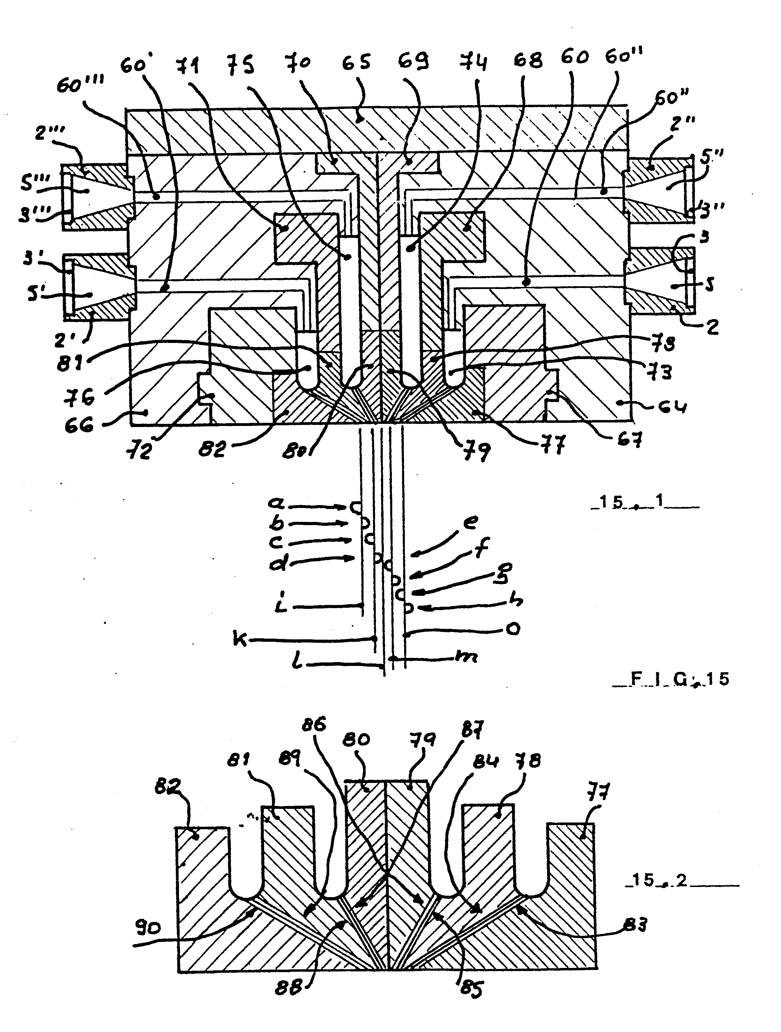

La fig. 14. représente une structure intégrale inter-réticulaire pouvant être produite par le dispositif de la fig. 13. En 14.-2, une vue latérale d'une structure "à plat" En 14.-3, une vue latérale de la même structure réalisée avec un dispositif courbé. La fig. 15. représente chématiquement une coupe d'un dispositif de refoulage "a plat" équipée de 4 chambres de distributions, donc pouvant produire 4 groupes de faisceaux. Ces 8 faisceaux, à cause des deux filières doubles " en V ", se superposeront ou coa- ligneront sur un maximum de 6 couches.

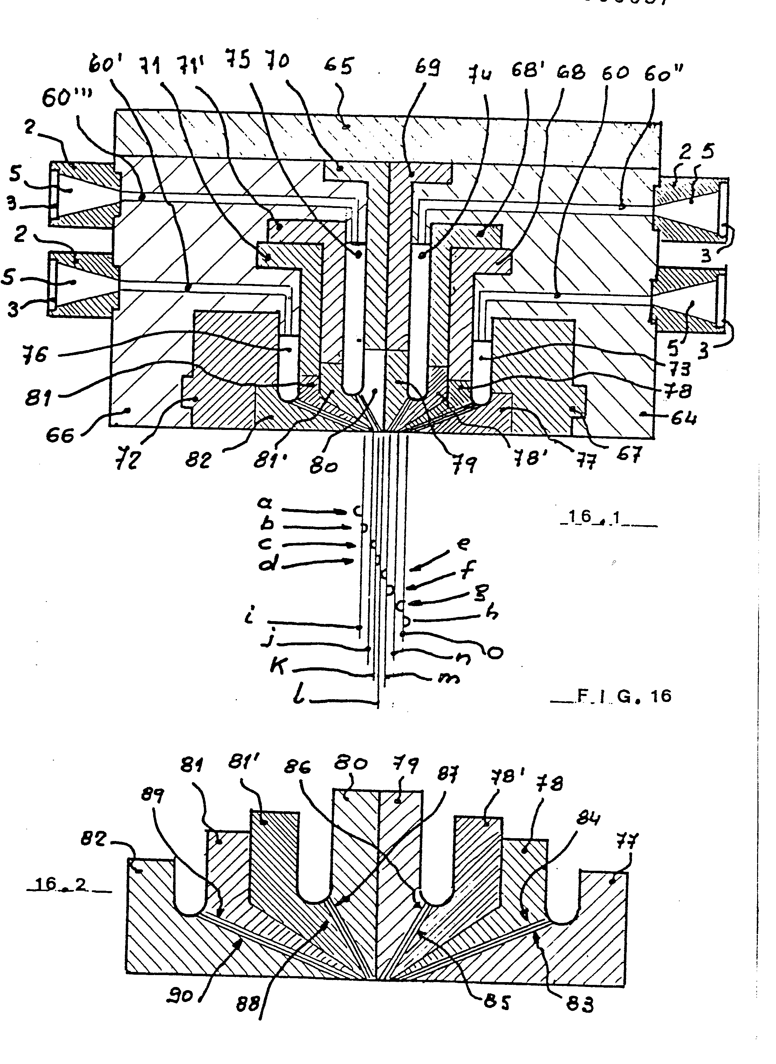

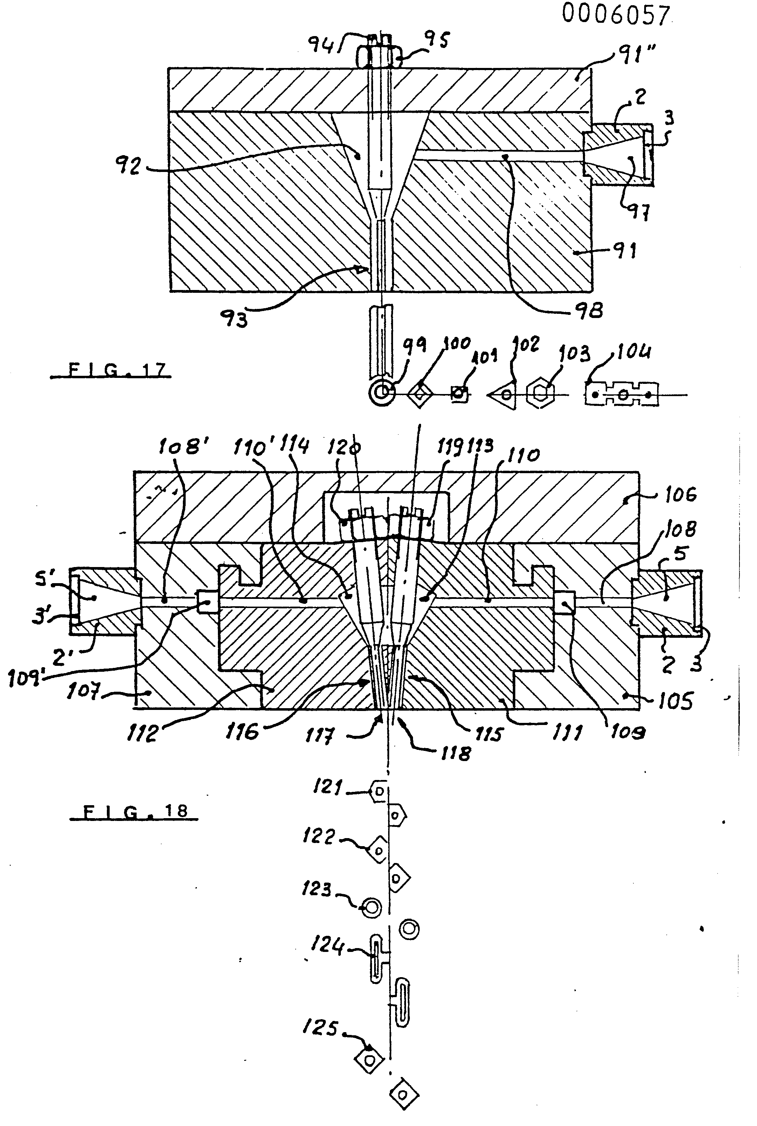

La fig. 16, représente schématiquement une coupe d'un dispositif de refoulage "à plat" équipé egalement avec 4 chambres de distribution mais où toutes les filières sont simples, donc qui pourra superposer 8 faisceaux de brins sur 8 couches superposées. La fig. 17, représente schématiquement une coupe de dispositif pour fabriquer des brins "creux". Avec 99... jusqu'à 104 on représente des exemples de sections.

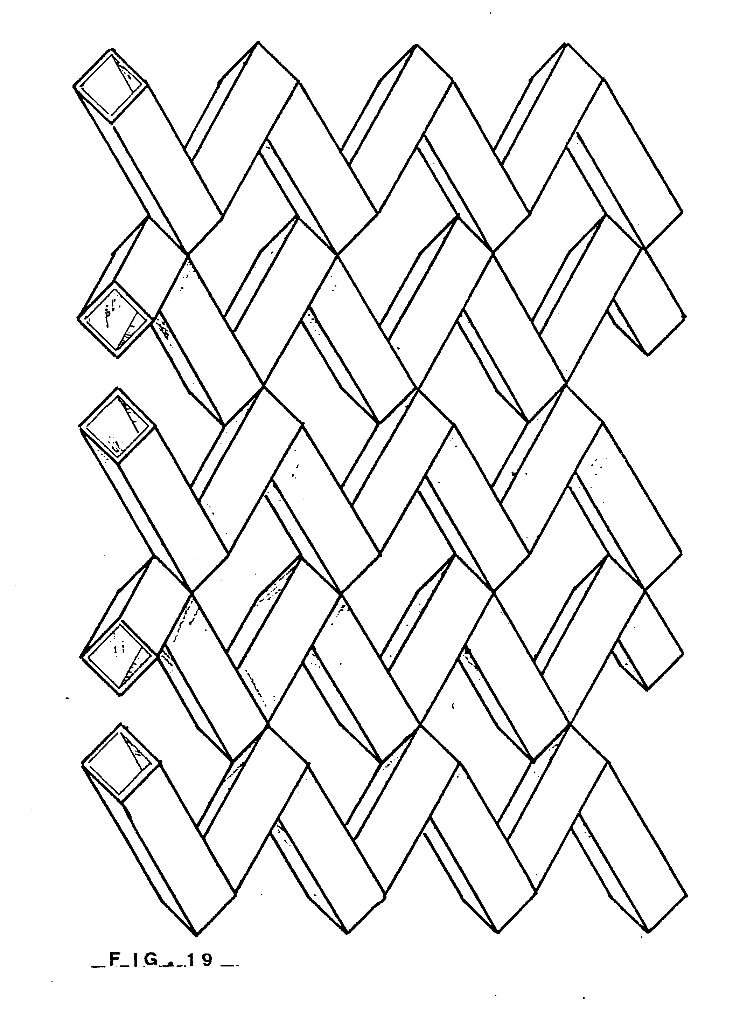

La fig. 18. représente schématiquement une coupe d'un dispositif de refoulage "à plat" simple où l'on a incorporé des dispositifs pour fabriquer une structure avec des brins creux.
La fig. 19, est un exemple de structure réalisée avec des brins creux.

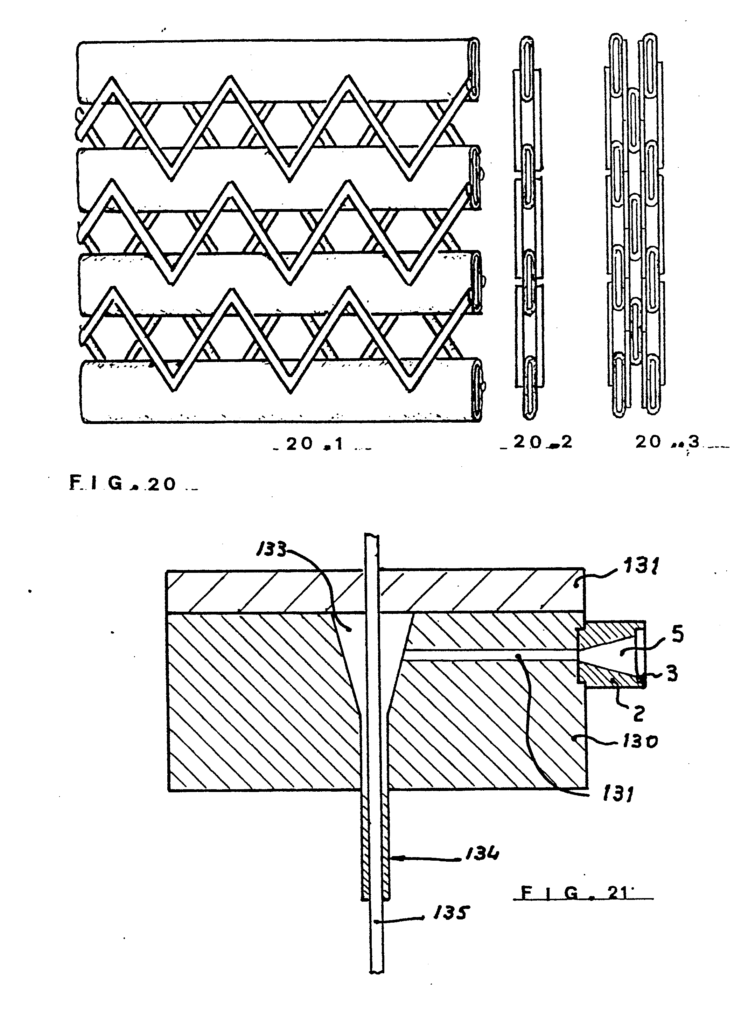

La fig. 20, représente une pooible structure integrale inter-réticulaire, réalisable à partir d'un dispositif de refoulage comme celui representé sur la fig. 18, dûment complété. En 20.-2, on représente la structure plus devellopée, comme possible modèle industriel.
La fig. 21. représente, schématiquement un dispositif de refoulage pour recouvrir des brins, obtenant ainsi des brins "farcis".

Pour les explications qui suivent sur le fonctionnement du dispositif de refoulage, suivant l'invention, nous ferons allusion aux fig. 1, 2 et 6.

Sur la fig. 1, le corps 1 est supposé uni ou accouplé a une source d'alimenta - tion à pression de matière thermoplastique, par exemple une extrudeuse, par l'inter- mediaire du col d'union 2 qui contient le filtre ou tamis 3.

On suppose pour toutes les explications qui suivront, que la matière thermoplastique se trouve dans un état de fluidité suffisante et adéquat pour être refoulé et que, par exemple, on dispose des résistances electiques 4 pour chauffer l'ensemble et que, des thermostats non représentés maintiennent la température nécessaire.

Dans ces conditions, une matière thermoplastique, colorée ou non, est poussée, à pression, à travers le col d'union 2, le tamis 3, les orifices 5 et 6, pour déboucher dans la chambre de distribution 8. La chambre 8, fermée, présente comme unique voie de sortie à la matière thermoplastique, les rainures façonnées sur les faces des filières 9 et 10. A la sortie des rainures 11 et 12 (fig.6) se forment les brins "f" et "en", (fig.l)

On e'apperçoit aisément que le cylindre porte-filière 13 peut tourner librement sur lui-même, pour ce faire, il s'appui, d'un côté, sur la base de l'ecrou de regla- ge 14, de l'autre côté, il ost guidé par lo coussinet en L qui, en même temps, remplit la fonction de fermeture de la chambre de distribution 8.

A sa base, le cylindre perte-filière 13 reçoit une couronne dentée 18 (qui peut être un engrenage ou autre moyen de transmission) à travers de laquelle on transmet le mouvement rotatif, par exemple, à partir d'un moteur de vitesse variable.

De la même manière, le cylindre porte filière 7 peut tourner également sur lui- ; même, en s'appuyant et se guidant entre les coussinets 15 et 16. Sur la saillie qui se trouve entre les coussinets 15 et 16, le porte-filiére 7 reçoit, à son tour, une couronne dentée 17; c'est à travers elle que l'on transmet le mouvement rotatoire ou oscillatoire au cylindre porte-filière 7.

Si, par exemple, l'on impose à la couronne dentée 18 un mouvement rotatoire vers la gauche et, au contraire, à la couronne dentée 17 un mouvement rotatoire vers la droite, ou vice-versa, on impose aux filières 9 et 10 (unies aux porte-filières 7 et 13) un déplacement continu transversal qui provoquera l'entrecroisement des deux faisceaux de brins "e" et "f", on obtient ainsi le produit réticulé primaire exterieur

Si l'on n'employait que cette partie du dispositif de refoulage, on pourrait fabriquer une maille tubulaire comme celle qui existe sur le marché.

Simultanément à l'action décrite, une matière thermoplastique, colorée ou non, est également pousée, à pression, à travers le col d'union 19, le tamis 3', les orifices 5 et 20, pour déboucher dans la chambre de distribution 22. Egalement, à travers les rainures 25 et 26, la matière thermoplastique s'écoule en formant les faisceaux "c" et "d",

Comme précedement, on s'apperçoit que l'axe - porte-filière 27 peut tourner librement sur lui-même en s'appuyant sur son écrou de réglage 28 - et le contre-écrou 29 de sécurité - lequel, à son tour, s'appui sur le cylindre porte filière 21 qui, lui, s'appui sur l'écrou 31- et son contre-écrou 32 de securité - qui peuvent tourner à leur tour sur eux-même.

L'axe 27 et le cylindre porte-filière 21 portent en leur extrémité supérieure les couronnes dentées 30 et 35 au travers desquels on pourra imposer les mouvements rotatoires aux deux pièces et, de ce fait obtenir l'entrecroisement des faisceaux "d" et "c" formant ainsi le produit réticulaire primaire intérieur.

Egalement, si l'on n'employait que cette partie du dispositif de refoulage, on pourrait fabriquer une maille tubulaire comme celle qui existe sur le marché.

Si l'on examine, separement, les rainures 11 et 12 du dispositif de refoulage de la fig. 1, on voit que les dites rainures sont façonnées sur les faces en contact des filières 9 et 10. Ces surfaces de friction forment une section de cône droit dont le sommet du cône se trouve vers le bas, comme dans un entonnoir dans sa position usuelle d'emploi. La matière thermoplastique, à sa sortie des filières 9 et 10 - en suivant l'inclinaison des rainures, formera un produit réticulaire primaire à diametre plus reduit que celui des rainures qui le génerent.

En examinant, maintenant, les rainures 25 et 26, on remarquera que celles-ci forment uns section de cône droit inversé par rapport au premier, avec le sommet du cône vers le haut. Dans ces conditions, la matière thermoplastique, inversement, dès sa sortie des filières 23 et 24, aura tendence a vouloir agrandir son diametre sous l'influence de l'inclinaison des rainures 25 et 26.

Comme résultat de ces deux tendences opposées, vu que, d'un côté, le tube qui se forme à l'intérieur a tendence a grossir son diamètre alors que le tube qui se forme simultanément autour de lui a tendence a réduire le sien, le résultat est que les deux produits réticulés primaires se rencontreront, aproximativement sur la ligne mediane L formant une zone de contact où par fusion ou soudure -suivant l'état dela matière thermoplastique - entre les points de contact les deux produits s'integrent en un seul produit, la structure integrale inter-réticulaire.

Superposer de la sorte deux ou plus produits réticulés primaire, les uns dans ou autour des autres est une nouveauté que réalise le procédé ici décrit.

La disposition, dans le dispositif de refoulage qui permet de produire, en les superposant chaque produit avec une qualité ou caractéristique particulière, par exemple avec un intérieur doux et un extérieur plus rigide, est une autre nouveauté que réalise l'invention.

De même, du fait de pouvoir colorer distinctement chaque produit composant on pourra le distinguer d'un autre similaire ayant des caractéristiques non visibles différentes, ce qui est une autre nouveauté que présente l'invention.

Pour les explications qui suivent, nous ferons référence aux fig. 1, 2, 3, 4, 5, 6 et 7, qui se complementent entre elles.

Sur la fig. 8, on a remplacé les cylindres porte-filières 7 et 21 par un seul cylindre 37 et, en consequence, les filières simples 10 et 23 par une double en forme de " V " 36. Les faisceaux de brins "d" et "e" sortant maintenant d'une même filière se trouveront, automatiquement coalignés dans une même couche, de ce fait, une structure integrale inter-réticulaire composée de 4 faisceaux de brins ne pourra que se superposer sur 3 couches, (fig. 4).

La caractéristique de pouvoir supperposer ou coaligner - réduisant l'épaisseur totale - plusieurs faisceaux de brins, est une autre nouveauté que présente l'invention.

Sur la fig. 11, donné à titre d'exemple indicatif mais non limitatif, on a complété les dispositifs de refoulage anterieure de façon à pouvoir produire une structure intégrale inter-réticulaire composée par 6 faisceaux de brins ou 3 groupes de refoulage.

La première matière thermoplastique est refoulée à partir du col d'union 2, les orifices 5 et 6 pour déboucher dans la chambre 8. La seconde passe par le col 19 les passages 5' et 39 pour déboucher dans la chambre de distribution 8'. La troisième passe par le col 45, les passages 5" et 38 pour aboutir à la chambre 22.

Avec ce dispositif de refoulage on obtiendra un produit réticulé primaire interieur composé des faisceaux "c" et "d"; un produit réticulé intermédiaire avec les faisceaux "e" et "f" et un troisième produit réticulé primaire exterieur avec les faisceaux "g" et "h".

En examinant la disposition des inclinaisons données aux filières, il s'en déduit aisément que les trois produits se rassembleront, les uns sur les autres et resteront integrés par leur point de contact formant une structure integrale inter-reticulaire qui, par la présence de duux doubles filières, ne pourra se superposer que sur un maxima de 4 couches.

Pour obtenir 6 couches il suffit de remettre à la place de la filière double 36 (fig. 12) les filières d'origine 10 et 23, (fig. 6.-1.) et à la place de la filière 42, deux filières simples comme sur la fig. 16.-1.

Sur la fig.13, on représente un dispositif de refoulage qui se differencie des anterieurs par le fait qu'il est rectilineaire au lieu de cylindrique.

Les explications suivantes, concernant cet appareil sont aussi applicables aux premiers dispositifs ai, au lieu de leur imposer un mouvement rotatoire on aurait impulsé un mouvement oscillatoire.

Dans l'essentiel, le dispositif de la fig. 13 se compose de:

Deux coulisses, 47 et 47', qui sont réunies entre elles par le support 46. avec le quel elles forment un bâtis. Dans les espaces libres de ce corps de refoulage, on fait glisser les coulisseaux-porte-filières 48, 49, 50 et 51. sur lesquels se fixent les filières 52, 53, 54 et 55.

On admet qu'aux extrémités de ce dispositif de refoulement -comme sur ceux qui viendront,- deux joues laterales assureront la fermeture des chambres de distribution 61 et 63, tout en permettant le glissement des coulisseaux.

Chaque chambre de distribution est alimentée à travers, l'une, du col d'union 2, des passages 5 et 60, l'autre l'étant par le col 2', les passages 5' et 62. A travers les rainures 56 et 57 se forment les faisceaux "e" et "f"; avec les rainures 58 et 59,(fig. 13.-2) se forment les faisceaux "c" et "d".

ai, par l'intermédiaire d'un mécanisme connu, un systhème de bièles, excentriques ou autres, on imprime à chaque coulisseau un mouvement oscillatoire tel qu'ils soient de sens inverses entra coulisseaux voisins, nous obligeons aux faisceaux de brins à s'entrecroiser et à former une structure integrale inter-réticulaire similaire à celle de la fig. 14, vu que l'inclinaison des filières, comme déjà expliqué contraindrait les faisceaux à se refondre en un tout dès la sortie des filières. Sur les fig. 14.-2 et 14.-3 on peut apprécier la superposition d'une structure réalisée avec un dispositif de refoulage rectilineaire et la structure obtenue avec un dispositif semblable courbé.

Dans la fig. 15, au dispositif précedent on a ajouté deux filières intermediai- res pour pourvoir obtenir une structure composée avec 8 faisceaux de brins, comple- tant ainsi le premier dispositif mais, surtout, montrant comment on peut le réaliser.

Un tel dispositif fournira, un premiêr produit réticulé primaire, faisceaux "a" et "b"; un dexième avec les faisceaux "c" et "d"; un troisième avec "e" et "f"; enfin un quatrième avec les faisceaux "g" et "h". La forte inclinaison des rainures (fig. 15.-2.) 83, 84, 85, 86, 87, 88, 89 et 90 des filières 77, 78, 79, 80, 81 et 82, contraint tous les faisceaux a se refondre en un tout, suivant le principe déjà expliqué.

La présence des filières doubles 78 et 81 obligera les 8 faisceaux a se superposer sur un maximum de 6 couches.

Sur la fig. 16, pour obtenir 8 couches avec les 8 faisceaux, on substitue les deux filières doubles 78 et 81 (fig.15) par les filières simples 78, 78', et 81', 81. pouvant ainsi faire s'entrecroiser tous les faisceaux et obtenir une structure integrale inter-réticulaire sur 8 couches.

Le fait de pouvoir contrôler, independament chaque faisceau de brins permet au présent procédé prédéterminer un ordonancement qui relationne les brins, les faisceaux, les produits réticulés primaires, l'inclinaison de chaque faisceau, les vitesses imposées de transmission, de production, les uperposition et/ou coalignement augmentant ou réduisant le nombre de couches du complexe, les diverses matières plastiques simultanément employées, et comme conséquence l'infinie variété de types de nouvelles structures intgrales inter-réticulaires pouvant repetitivement se reproduire, industriellement et fiablement, ce qui représente une nouveauté de la présente invention.

La disposition adoptée permet d'autres réalisations particulières, comme: Supposons qu'avec le dispositif de refoulage représenté sur la fig. 5 - filières agrandies em fig. 6 - nous façconnions les rainures 40 de la manière suivante: On divise d'abord la filière double en deux moitiés, de 0 à 180° et de 180° à 360°. Ensuite, chaque n, milimètres on façonne les rainures 40 dans la moitié comprise entre 0° et 180°, et de 180° à 360° on ne façonne que des rainures 41, c'est à dire sur la face opposée de la filière 36.

La filière ainsi préparée, montée dans le diopositif donnerait: de 0° à 180° des faisceaux "e", "d" et "f"; do 180° à 360° des faisceaux "c", "e" et "f".

Si, en suivant la supposition, on refoule de la matière thermoplastique dans chauq chambre de distribution, mais en colorant en rouge celle de la chambre 22 et en jaune celle de la chambre 8 et si, en plus, on inmobilise etatiquement la filière 36, la structure integrale inter-réticulaire resultante presenterait: de 0 à 180° une coloration où dominerait le rouge ( seuls les brins "f" sont jaunes contre "c" et "d" rouges) tandis que de 180 à 360° ce sera le jaune le dominant ( seuls les brins "c" sont rouges contre "e" et "f" jaunes)

En jouant sur la repartition des rainures 40 et 41 tout au long de la filière 36, la structure integrale inter-téticulaire pourrait presenter une série de bandes diversement colorées ( en fonction du nombre de chambres) ce qui represente une autre nouveauté de l'invention.

Comme citation de l'utilité de cette nouveauté - mises à part les applications effectivistes et publicitaires - supposons, par exemple que l'on réalise un tissu de texture similaire a celui de la fig. 14, mais... avec 8 couches. Seulement par coloration dans la masse des couches ou en formant des bandes on peut codifier de manière fiable ces complexes structures - qui peuvent avoir des caracteriatiques non visibles à l'oeuil - ce qui represente une autre nouveauté de l'invention.

Pour completer encore cette proprieté de produire des bandes colorées longitudinalement ou diagonalement dans ou sur la structure, supposons qu'a 0° de la filière 36, on dispose, se touchant, une série de rainures 40; de chaque côté de la bande que l'on pourra ainsi obtenir, on dispose, inmediatement des series de rainures 4i. Le refoulage, dans ces conditions donnerait une bande centrale, par exemple de couleur jaune et, juxtaposées, de chaque côté une bande de couleur rouge.

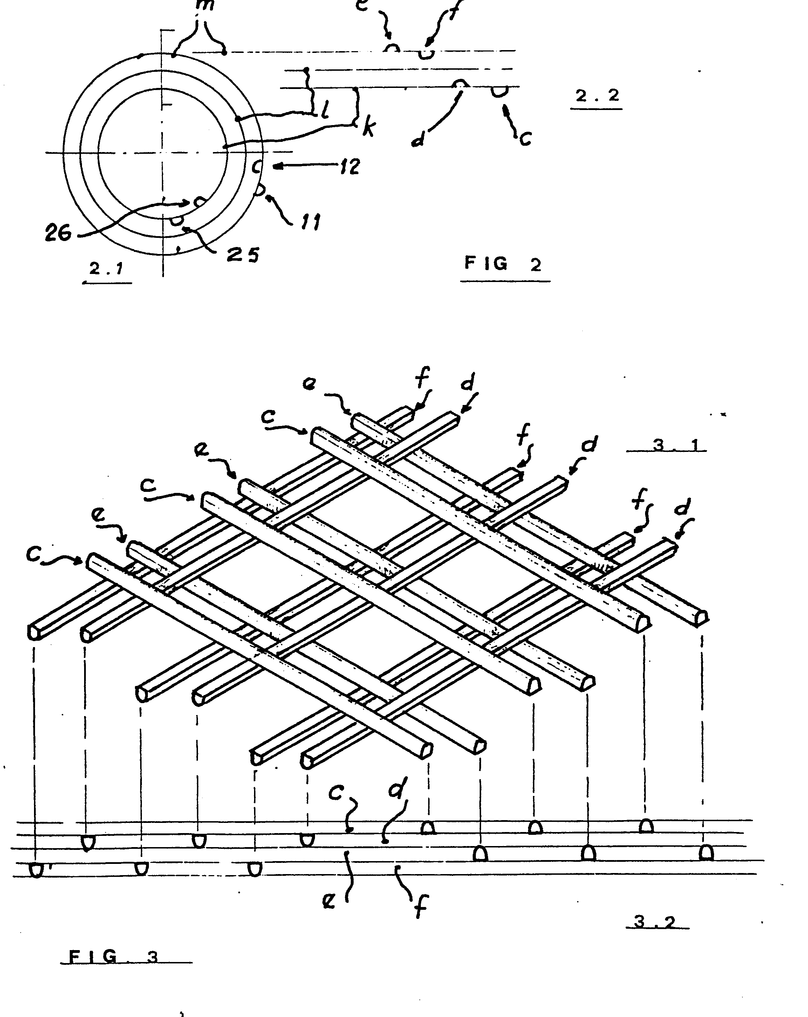

A continuation nous allons demontrer une autre particularité de l'invention: Sur la fig. 2, vues de dessous, on represente les filières du dispositif de refoulage de la fig. 1. "m" est la ligne qui represente l'union entre les filières 9 et 10 (fig. 6.-1); "1" represente la ligne d'union entre les filières 10 et 23; "k" represente la ligne d'union entre les filières 23 et 24.

A cheval sur "m" on represente les brins e/f produits par les rainures 11 et 12; a cheval sur "k" on represente les brins c/d formés par les rainures 25 et 26.

La ligne mediane "1"representant la ligne d'union entre les filières 10 et 23 represente aussi le diametre exterieur du cylindre porte-filière 21 ou le diametre interieur du cylindre 7 et du corps 1.

Toute action sur l'écrou de réglage 31, a pour consequence de faire monter ou descendre le cylindre 21. Cette action ne dérègle pas le dispositif.

Supposons encore que, pour le produit réticulé primaire intérieur (chambre 22) on emploi une matière thermoplastique molle, tandis que, pour le produit rsticulé primaire extérieur (chambre 8) on emploie une matière thermoplastique plus dure; par exemple deux polyethilènes l'un de basse densité l'autre haute densité.

Pour mieux s'adapter aux deux matières thermoplastiques afin de permettre une meuilleure refonte hors filières, ( à part de jouer sur les temperatures ) il est interressant de pouvoir soit monter le groupe central soit de le baisser afin de choisir, dans l'espace, le point d'union entre les deux produits de façon a "retarder" ou "avancer" le moment de mise en contact et de fusion ou soudure.

Cette possibilité de jouer, en déplaçant un groupe entier par rapport aux autres est une autre nouveauté de l'invention.

Rentrant, maintenant dans le domaine plus déterminant des nouvelles structures intégrales inter-réticulaires, on va démontrer comment on peut insérer dans le dispositif de refoulage d'autres proprietés, conformément au procedé objet de cette invention.

Sur la fig. 17, est representé un dispositif simplifié pour produire des brins "CREUX". Ce brin, suivant la matière thermoplastique utilisée sera flexible, semi-rigide ou rigide; également il resistera aux influences des températures en consequence. Les sections et dessins que peut prendre ces brins ( 99, 100, 101, 102, 103, 104, donnés à titre non limitatif) sont pratiquement infinies. Quoique le principe est connu, son application est nouvelle, surtout par le fait qui va se démontrer plus avant, que l'on peut envisager, maintenant a fabriquer des éléments pour interchangeurs de chaleur, par exemple, comme des radiateurs pour automobile, etc. par une opération continue de refoulage d'une matière thermoplastique, ce qui est une autre nouveauté de l'invention.

Nous expliquerons le processus vu son incorporation dans le dispositif de refoulage et sa nouvelle application.

Par le col d'union 2, les conduits 98 on impulse une matière thermoplastique à pression qui aboutit dans la chambre de distribution 92. Par l'unique sortie 93, en sortant, la matière thermoplastique entoure le poinçon 94 et sort de la filière sous forme de tube.

Sur la fig. 18 noua représentons schématiquement son implantation dans un dispositif de refoulage. Suivant le cycle répété d'alimentation à pressi6n, par les cols 2 et 2', les conduits 5, 5', 108, 108', 109, 109', 110 et 110' on débouche dans les chambres 113 et 114 que l'on représente, ici, communiquées entre elles pour montrer cette possibilité, et partant de lá de pouvoir mélanger les proprietés et/ou les cou- leurs des chambres entre elles.

Nous obtenons donc, ainsi, deux faisceaux de brins creux que l'on peut faire entrecroiser ou entre-toucher formant une structure comme celle représentée sur la fige 19, à titre d'exemple. La formation de structures integrules inter-réticulaires formées do brins creux est une autre nouveauté de l'invention.

Afin de montrer la possibilité de fabriquer une application reellement industrielle, avec application inmediate telle que décrite, on va supposer:

On part d'un dispositif de refoulage comme celui représenté sur la fige 13. et nous disposons en lui des filières comme celles de la fig. 6.-2. et 6.-2'. Sur la filière centrale 36 on supprime les rainures 4o et 41. (dans le but de simplifier les explications) au travers de cette filière, sortant dans la base du " Y " qui peut être aussi large que nécessaire, on façonne des rainures passantes, commodes forages, por obtenir un brin creux comme celui représenté sur la fige 20 (brin 128) sur les filières 9 et 24, ( 52 et 55 de la fig. 13) on maintient les rainures 11 et 26, de façon a produire les brins 127 et 129 de la fig. 20.

Si l'on inmobilise la filière 36, et l'on actionne seulement les filières 52 et 55, (fig. 13) et si, les rainures de la filière 36 don duement équipées d'âmes pour former les brins 128, on refoulera une structure comme celle représentée en la fig. 20.-1.

En devellopant l'exposé, on peut réaliser sans problèmes la structure de la fige 20.-2. qui est un element de radiateur, ce qui représente une autre nouveauté.

Sur la fige 21, volontairement calquée sur la fige 17, nous représentons un dispositif connu de recouvrement de fils. Ici encore, la matière thermoplastique de la chambre de compression en sortant par la rainure forme le brin 134 qui entoure le filament 135 et, sous sa pression, entrine celui-ci en continu.

Dans un dévellopé similaire a celui exposé plus haut, rien n'empêche de fabriquer une structure integrale inter-réticulaire, par exemple comme celle de la fige 14 dont tous les brins contiendraient un filament; que celui-ci soit métallique, thermoplastique ou un aggloméré.

Si, par exemple, un des agglomérés est une résistance électrique, à caracteris- tique positive ou négative, celle-ci laissera passer ou coupera un signal électrique quand, par exemple toute la structure atteigne une temperature donnée. Au contraire si l'agglomeré incorporé dans un brin est un conducteur de l'électricité il laissera passer des signaux, une force etc électrique, si, en échange un des brins est creux, il pourra, soir laisser passer un liquide, soit en contenir un pour mesurer sa dilatation, etc. applications, toutes qui sont encore une autre nouveauté de l'in vention.

Comme résumé, non limitatif, on donne à conyinuation, une liste d'applications industrielles de cette invention:
1.- Structures intégrales inter-réticulaires pour fabriquer des éléments filtrants de Haute téchnicité, coaportant un classement et repérage facile par coloration combinée dans la masse.
2.- Structure intégrale inter-réticulaire appliquée au domaine de l'emballage où elle apporte, en toutes combinaisons:
   - Des structures sous formes de tubes, présentant une face intérieure suffisamment douce pour ne pas endommager le contenu emballé.
   - Des tubes réticulés ayant une face externe peu ou très rigide pouvant assurer une grande stabilité du point de vue dimentionnel.
   - Des tubes inter-réticulés ayant une face extérieure qui puisse assurer une grande résistance à la traction.
   - Des tubes inter-réticulaires le long desquels, longitudinalement ou diagona- lenent, on inclu une alternance de bandes multicolores.
   - Des sacs, sachets, bourses, etc. fabriqués avec cette structure intégrale inter-réticulaire.
3.- Structure intégrale inter-réticulaire caracterisé par le fait d'inclure dans sa constitution un, plusieurs ou tous les brins creux, à partir de laquelle on peut fabriquer en toutes combinaisons:
   - Des écrans échangeurs de chaleur...
   - Des panneaux décoratif combinant avec leur fonction d'échangeurs...
   - Des écrans capteurs de chaleur solaire...
   - Des panneaux accumulateurs de chaleur...
   - Des panneaux pour radiateurs stationnaires ou mobiles à large application

   dans l'industrie automobile, ferroviaire, aéronavale, aéronautique, ....
   - Des panneaux pour radiateurs, stationnaires ou mobiles, por applications domestiques, commerciales....
4.- Structure intégrale inter-réticulaire caractérisée par le fait d'inclure dans un, plusieurs ou tous ses brins un élément lecteur de temeperatures, à partir de laquelle on peut fabriquer en toutes combinaisons:
   - Des panneaux capteurs, interchangeura... de chaleur, autoprotégés contre le gel,...
   - Dea supports pour les plantes, servant de lecteur de temeprature...
   - Des supports pour les plantes combinant avec les fantions d'ombrelle, parevent conducteur d'eau, arroisoir, etc...
   - Des radiateurs avec lecteur de temperature incorpoé dans la masse...
5.- Structure integrale inter-réticulaire caracterisée par le fait que on a inclu dans un, plusieurs ou tous ses brins un conducteur d'électricité qui permet l'émission ou réception de signaux électriques, transmission de force, création do champs magnetiques, à partir desquels on peut fabriquer, en toutes combinaisos:
   - Des grillages pour protection d'autoroutes, aéroports, casernes, champs de tir, champs minés, qui signaleront leur rupture ou cassure...
   - Des grillages pour détection de pannes sur 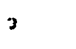 à des installations sous-ter- raines électriques, de gaz, téléphone, etc. Avertissant de tout mouvement de terre - non visible en surfave - sufisamment important pour casser le grillage...
   - Des filets ou grillages pour installer sous les lignes de haute tension, em- pèchant la chutte de lignes eu des lieux frequentés et en signalant l'accident...
   - Des grillages pouvant créér des champs magnétiques - sous impulsions de courant électrique - pour détecter avec une plus grande certitude des lignes sous-ter- raines recouvertes d'un tel grillage...
6.- Structure intégrale inter-réticulaire caractérisée par le fait que dans le champ de la construction on peut fabriquer, en toutes combinaisons:
   - Des éléments décoratifs pour façades d'édifices, combinant, par exemple avec la fonction de capteur de chaleur...
   - Des panneaux décoratifs pour séparation de locaux, chambees, etc. avec d'autres combinaisons...
   - Des éléments servant à construire: des verandas, ballustrades, clôtures, balcons, etc. en combinaison avec d'autres fonctions...

Toutes les variations décrites étant alternées et/ou combinées, ajoutées et/ou simultannées caractérisent comme propre et nouvelle la structure integrale inter-réticulaire aux multiples possibilités d'execution ainsi que le dispositif de refoula- ge.

Le changement de forme, dimentions, ainsi que la disposition des éléments de la structure intégrale inter-réticulaire et/ou du dispositif de refoulage pourront être variables; donc, n'importe quelle modification introduite dans ce sens sera conside- rée comprise dans le brevet d'invention, sans que, pour cela, on considère que ces variations altèrent son essence.

## Revendications

1.- Procédé et dispositif pour réaliser, par rofoulago de matière thormoplasti- que de nouvelles structures intégrales inter-réticulaires de forme tubulaires ou en bandes ou feuilles continues, caracterisé par le fait qu' on refoule une ou plusieurs matières thermoplastiques, simultanément, de façon à former plusieurs faisceaux de ; brins qui, séparément ou groupés en produits réticulés primaires sont superposés les uns dans ou autour des autres ou les uns sur ou entre d'autres en couches superposées (le nombre de faisceaux étant au moins égal à 4 et pouvant atteindre plus de 8 groupes) de façon que tous les faisceaux, dans la même opération continue, se refondent constituant ainsi une nouvelle structure intégrale inter-réticulaire en forme tubulaire ou en bande ou feuille continue.

2.- Procédé, suivant la revendication 1, caractérisé par le fait que l'inclinaison donnée aux faces rainurées des filières contraint les faisceaux de brins et/ou les produits réticulés primaires à s'entre-trouver en continu car, en forçant cette mise en contact, elle provoque la fusi6n de tous les faisceaux de brins en un seul tout.

3.- Procédé, suivant la revendication 1 et 2, caracterisé par le fait que le nombre de faisceaux de brins superposés (4 ou plus) peut être traité en groupes (grou pement qui forme le produit réticulé primaire) et que chaque groupe peut être alimenté à pression indépendament des autres avec une matière thermoplastique et/ou une couleur definies.

4.- Procédé, suivant la revendication 1 et suivantes, caracterisé par le fait que le nombre total de faisceaux de brins produits peut être réduit en un plus petit nombre de couches par coalignement de deux ou plusieurs faisceaux de brins, soit en synchronisant plusieurs filières simples, soit par l'emploi de filières doubles en toutes combinaisons.

5.- Procédé, suivant la revendication 1 et suivantes, caracterisé par le fait que chaque élément porte filière étant clairement indépendant et pouvant être mû dans des conditions précises, donc, répétitives, on peut reproduire industriellement et avec fidélité une structure intégrale inter-réticulaire aussi complexe soit-elle.

6.- Procédé, suivant la revendication 1 et suivantes, caracterisé par le fait qu'on peut évider un, plusieurs ou tous les brins d'une structure intégrale inter- réticulaire en plaçant dans chaque rainure une âme métallique (poinçon, matrice,) évidant le brin, soit concentriquement, soit excentriquement, soit en formant une section ouverte, comme en forme de " C ".

7.- Procédé, suivant la revendication 1 et suivantes, caracterisé par le fait qu'à travers un orifice étant dans l'axe d'une rainure on introduit un filament préfabriqué, en continu, et qu'à son passage dans la rainure il se retrouve systhéma- tiquement recouvert par la matière thermoplastique qui l'entraîne et l'incorpore, isolé, dans la structure.

8.- Procédé, suivant la revendication 1 et suivantes, caracterisé par le fait que, dans la même opération continue, on incorpore dans la structure des éléments isolés apportant, séparement ou en toutes combinaisons: une résistance mécanique à la traction; une résistance électro-positive ou électro-négative; un moyen de transport pour une formce électrique; un moyen d'émettre des eignaux électriques, des impulsions, etc.; un moyen de créér un champ magétique, etc.

9.- Procédé, suivant la revendication 1 et suivantes, caracterisé par le fait qu'en juxtaposant, côte à côte, plusieurs rainures sur la face d'une filière on forme des franges ou bandes le long d'une structure intégrale inter-réticulaire, diagonalement ou parallelement à son axe, coalignées ou superposées à d'autres bandes differamant colorées.

10.- Procédé, suivant la revendication 1 et suivantes, caraterisé par le fait que si dans une zone d'une filière on ne façonne pas de rainures, donc, on ne produit pas de brins d'une des couleurs, on obtient dans cette zone une coloration dominée par l'autre couleur, formant ainsi des franges ou bandes réticulées à coloration dominante.

11.- Un dispositif de refoulage, suivant la revendication 1, caracterisé par les particularités suivantes, prises séparément, conjointement ou en toutes combinaisons:
a.- Il comporte des moyens nécessaires pour s'accoupler à autant de sources d'alimentation à pression que de matières thermoplastiques différentes l'on veuille employer.
b.- Il comporte autant de cols d'union, unis aux orifices pratiqués dans les éléments porte-filières, que de chambres de distribution, on fonction du nombre de groupes de faisceaux de brins l'on veut produire avec des caractéristiques physiques (matières thermoplastiques) differentes.
c.- Il comporte autant de jeux porte-filières et jeux de filières que de produits réticulés primaires ou groupements de faisceaux de brins on veut traiter.
d.- Les filières sont simples,( ezec une seule face rainurée ), doubles (avec deux faces rainurées) etc. planes, courbes, annulaires, concentriques et/ou excentriques etc. et possèdent des moyens pour s'accoupler sur les èlements porte-filières,
e.- Sur la ou les faces des filières on peut façonner des rainures ouvertes ou fermées (comme des perçages) dont la section peut prendre des formes geomotriques quelconques; les rainures peuvent se trouver rapprochées, séparées ou assemblées sur une partie de la face; un secteur peut rester sans rainures.
f.- Chaque élément porte-filière a une géométrie particulière en fonction et suivant la place ou position qu'elle occupe dans le dispositif de refoulage.
g.- chaque élément porte-filière comporte des moyens nécessaires pour y fixer des filières ainsi que les életments (pignoas, engrennages, etc,) à travers lesquels on transmet les mouvements rotatoires, oscillatoires ou l'immobilisation statique.
h.- Le mouvement rotatoire de chaque élément porte-filière peut avoir un sens positif ou négatif, constant ou non, à vitesse variable et/ou échelonnée independament de celui de l'élément voisin.
i.- Le mouvement oscillatoire de chaque élement porte-filière peut presenter des oscillations régulières, variables, échelonnéss, etc.
j.- Les faces rainurées de chauq filière ont un degré d'inclinaison appropie, suivant fa place ou position qu'olle occupe dans le dispositif de refoulage.
k.- Le dispositif de refoulage comporte des moyens necessaires pour faire des-. cendre ou remonter, l'un par rapport à un autre, les groupes d'organes producteurs d'un produit réticulé primaire, en vissant ou dévissant les écrous d'appui sans dérégler les jeux de filières.
1.- Il comporte des moyens nécessaires pour pouvoir substituer un, plusieurs ou tous les brins "massifs" par des "brins creux" en incorporant dans les rainures une âme métallique fixée sur la filière ou le prote-filière, de manière à occuper la partie de la rainure que l'on veut évider de matière thermoplastique; chaque âme métallique possède les moyens de regulation, de centrage ou excentrage.
m.- Les éléments porte-filières comportent des orifices façonnés dans l'axe des rainures visées, pour introduire dans une, plusieurs ou toutes les rainures, un filamant préformé.
n.- Le dispositif de refoulage comporte des moyens d'avance et d'introduction des filamants préfabriqués ainsi que des moyens pour centrer ou excentrer ce filament dans chaque rainure.
o.- Les chambre de distribution, annulaires, concentriques, rectilineaires, courbes, etc. peuvent se communiquer entr'elles ou rester isolées les unes des autres.
p.- Le dispositif de refoulage comporte un corps sur lequel on conditionne tous les moyens nécessaires pour réaliser séparément, conjointement ou en toutes combinaisons les structures intégrales inter-réticulaires comme ici décrit.

12.- UNE STRUCTURE INTEGRALE INTER-RETICULAIRE POSSEDANT SEPAREMENT, CONJOINTEMENT OU EN TOUTES COMBINAISONS POSSIBLES LES REVENDICATIONS PRECEDENTES.
